# EUROPEAN PATENT SPECIFICATION

(11) **EP 4 266 455 B1**
(45) Date of publication and mention of the grant of the patent: **13.05.2026**
(21) Application number: 22169361.7
(22) Date of filing: 22.04.2022
(51) Int. Cl.: H01M 10/613, B60L 50/64, H01M 10/625, H01M 10/6555, H01M 10/6557, H01M 50/204, H01M 50/249

(54) **BATTERY MODULE HAVING A HOUSING WITH COOLANT JACKETS**
BATTERIEMODUL MIT EINEM GEHÄUSE MIT KÜHLMÄNTELN
MODULE DE BATTERIE DOTÉ D'UN BOÎTIER COMPORTANT DES CHEMISES DE REFROIDISSEMENT

(43) Date of publication of application: 25.10.2023
(73) Proprietor: Samsung SDI Co., Ltd., Yongin-si, Gyeonggi-do 17084 (KR)
(72) Inventor: Hadler, Bernhard, 8073 Feldkirchen/Graz (AT)
(74) Representative: Gulde & Partner

(56) References cited:
- DE-A1- 102013 021 670
- DE-U1- 202019 106 550
- JP-A- 2014 089 822
- US-A1- 2018 337 377

## Description

### Field of the Disclosure

The present disclosure relates to a battery module having a housing with coolant jackets that allows for an efficient cooling of battery stacks arranged within the housing from different sides. The disclosure further relates to a battery pack comprising the afore-mentioned battery module and a vehicle comprising one or more of the afore-mentioned battery modules and/or one or more of the afore-mentioned battery packs.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle additionally powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e. g. cylindrical or prismatic, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid or fully electric vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series *(XpYs)* or multiple cells connected in series that are connected in parallel *(XsYp).*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

The mechanical integration of such a battery pack requires appropriate mechanical connections between the individual components, e. g., of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e. g. an electric vehicle. Thus, the replacement of defect system parts, e. g., a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e. g., in the mechanic's workshop, of the bulky battery systems becomes difficult.

To provide thermal control of the battery pack an active or passive thermal management system is required to safely use the at least one battery module by efficiently emitting, discharging and/or dissipating heat generated from its rechargeable batteries. If the heat emission/ discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/ dissipating heat from the cells is required.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery housing. For example, when a cell is heated above a critical temperature (typically above 150°C), it can transit into a thermal runaway. The initial heating may be caused by a local failure, such as a cell internal short circuit, heating from a defect electrical contact, short circuit to a neighboring cell. During the thermal runaway, a failed battery cell, i. e., a battery cell which has a local failure, may reach a temperature exceeding 700°C. Further, large quantities of hot gas are ejected from inside of the failed battery cell through the venting opening of the battery housing into the battery pack. The main components of the vented gas are H₂, CO₂, CO, electrolyte vapor and other hydrocarbons. The vented gas is therefore burnable and potentially toxic. The vented gas also causes a gas-pressure to increase inside the battery pack.

State of the art cooling systems are flat, usually placed on the bottom of the cell. Different technologies are used for creating a flat cooler. However, also in view of the increasing requirements for the performance of battery modules, such conventional cooling systems may not be fully sufficient, e. g., during fast charging, acceleration, high speed operation, or the like.

Thus, there is a need to increase the efficiency of the cooling system within a battery module, in particular in view of high-performance events (e. g., fast charging, acceleration, high speed operation) or thermal propagation.

Hence, it is an object of the present invention as defined by the independent claims to overcome or reduce at least the above-described drawbacks of the prior art and to provide a battery pack with improved characteristics in this regard.

In US 2018/337377 A1, a battery tray for an electric vehicle is described, the electric vehicle including a tub component that has a floor portion and a perimeter wall portion that integrally extends upward around a peripheral edge of the floor portion to border a battery containment area of the tub component. The tub component may include a plurality of cross member portions that integrally interconnect with the floor portion and the perimeter wall portion so as to span laterally across the battery containment area to divide the battery containment area into separate compartments. A support structure of the battery tray may have an elongated member coupled at an exterior side of each of opposing longitudinal sections of the perimeter wall portion of the tub component.

DE 10 2013 021670 A1 describes a cooling structure having an outer shell and an inner shell, which are arranged to form a component with a double-walled elongated ribs having undulating profile. The double-walled elongated ribs form a flat run-up side for engaging a portion of a battery cell of high-voltage battery. The outer shell is contacted in shell region of inner shell so that the elongated cooling channels are formed at double-walled elongated ribs for passing coolant. An independent claim is included for a high voltage battery.

Further, utility model DE 20 2019 106550 U1 discloses a battery device, wherein the battery device comprises one or more battery modules, wherein a respective battery module comprises: a frame element; a base element and a plurality of battery cells, wherein the frame element (104) comprises a double wall, in particular an annularly closed double wall.

### Summary of Invention

The invention is defined by the appended claims. The description that follows is subjected to this limitation. Any disclosure lying outside the scope of said claims is only intended for illustrative as well as comparative purposes.

According to a first aspect of the present disclosure, a battery module is disclosed, the battery module comprising: a base portion, a base cover, and a plurality of groups of battery cells. The base portion extends along a first virtual plane being perpendicular to a first direction. The base portion comprises a plurality of indentations protruding against the first direction. Each of the indentations forms a compartment configured to accommodate a group of battery cells. Each of the groups of battery cells is accommodated in one of the compartments. For any two neighbored indentations, an interstice is formed between these indentations, each of the interstices being configured for being filled with a coolant. The base cover extends along a second virtual plane being parallel to the first virtual plane and arranged in front of the first plane, when viewing into the first direction. The base cover is spaced apart from each of the indentations. A space is formed between the base cover and the indentations, the space being configured for being filled with a coolant. The space and the interstices are connected to each other. Each of the indentations comprises a base area. Further, the side of base cover facing the base portion comprises an elevated structure forming one or more streaming beds or semi-tubes-like structures configured for guiding a coolant across the side along a predefined way; and/or the sides of at least some of the base areas facing the base cover comprise an elevated structure forming one or more streaming beds or semi-tubes-like structures configured for guiding a coolant across the side along a predefined way.

According to a second aspect of the present disclosure, a battery pack is disclosed, the battery pack comprising one or more of the battery modules according to the first aspect.

A third aspect of the present disclosure refers to a vehicle comprising at least one battery module according to the first aspect and/or at least one battery pack according to the second aspect.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: is a schematic top view illustrating a first embodiment of the battery module according to the present disclosure;
- Fig. 2: is a schematic cross-sectional cut through the first embodiment shown in Fig. 1;
- Fig. 3: is a further schematic cross-sectional cut through the first embodiment shown in Fig. 1;
- Fig. 4: provides yet a further cross-sectional view through the first embodiment shown in Fig. 1;
- Fig. 5: schematically illustrates the perspective view of a further example of a base portion;
- Fig. 6: shows schematically parts of yet a further embodiment of the battery module according to the disclosure;
- Fig. 7A: shows a schematic cut through an embodiment of the battery module according to the disclosure;
- Fig. 7B: shows the situation of Fig. 7A in a perspective view;
- Fig. 7C: is a perspective bottom view of parts of an embodiment of the battery module similar to a slightly modified version of the first embodiment as shown in Figs. 1 to 4; and
- Fig. 8: schematically illustrates a cross-sectional cut through an alternative example of a base portion.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first", "second", "third" and the like are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of ±5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, spaces, interstices, gaps, or elements may also be present.

To facilitate the description, a coordinate system with axes x, y, z maybe also provided in at least some of the figures. Herein, unless explicitly defined otherwise in the context of a figure, the terms "upper" and "lower" are defined according to the x-axis. For example, the upper cover is positioned at the upper part of the x-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e. g., an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e. g., on a PCB or another kind of circuit carrier. The conducting elements may comprise metallization, e. g., surface metallizations and/or pins, and/or may comprise conductive polymers or ceramics. Further electrical energy might be transmitted via wireless connections, e. g., using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

A first aspect of the present disclosure relates to a battery module comprising: a base portion, a base cover, a plurality of groups of battery cells, wherein the base portion extends along a first virtual plane being perpendicular to a first direction; wherein the base portion comprises a plurality of indentations protruding against the first direction; wherein each of the indentations forms a compartment configured to accommodate a group of battery cells; wherein each of the groups of battery cells is accommodated in one of the compartments; wherein for any two neighbored indentations, an interstice is formed between these indentations, each of the interstices being configured for being filled with a coolant; wherein the base cover extends along a second virtual plane being parallel to the first virtual plane and arranged in front of the first plane, when viewing into the first direction; and wherein the base cover is spaced apart from each of the indentations; wherein a space is formed between the base cover and the indentations, the space being configured for being filled with a coolant; and wherein the space and the interstices are connected to each other. Each of the indentations comprises a base area. Further, the side of base cover facing the base portion comprises an elevated structure forming one or more streaming beds or semi-tubes-like structures configured for guiding a coolant across the side along a predefined way, and/or the sides of at least some of the base areas facing the base cover comprise an elevated structure forming one or more streaming beds or semi-tubes-like structures configured for guiding a coolant across the side along a predefined way.

The term "virtual plane" shall denote here that the expression "plane" only serves as a means to describe the geometry of an object, whereas the "virtual plane" itself is not realized as an object. The term "indentation" means that within a certain confined area of the base portion, a kind of embayment or a depression is formed in the base portion. Then, the compartments can each be regarded as kind of cavities (which are open in the area of the first virtual plane) or depressions (when viewed against the first direction). The expression "coolant" is meant to refer to a "cooling fluid."

As can be taken from the above, in accordance with the first aspect of the disclosure, an additional side cooling of the battery cells is established in order to improve the cooling system of the battery cells during high performance events (e. g., fast charging, acceleration, high speed operation) or thermal propagation.

A space between neighbored indentations (interstice) may be formed between these indentations, when viewing in a direction perpendicular to the first direction. Further, a space between the base portion and the base cover may be formed with regard to the first direction. Thus, a space is formed in between the base cover and the base portion, into which a coolant can be filled. The space between the base cover and the base portion is linked to the spaces between the indentations. In other words, the space in total comprises (i) the gap between the base cover and the bottom sides of the indentations (i. e., the areas of the indentations that are closest to the base cover) and (ii) the interstices between the various indentations. Then, when providing a sufficient amount of coolant, the coolant reaches from the gap between the base cover and the bottom sides of the indentations into the interstices between the various indentations and thus may cool the compartments formed by the indentations from various sides.

In embodiments, the battery module according to the first aspect may further comprise a top cover extending parallel to the first virtual plane and arranged opposite to the base cover with respect to the base portion. In other words, in those embodiments, the base portion is arranged in between the base cover and the top cover.

In one embodiment of the battery module, the base portion is formed, as one piece, by injection molding or die casting.

In this case, the base potion is formed as an casted housing structure suitable for accommodating a plurality of groups of battery cells. This facilitates the manufacture of the base portion and thus considerably reduces the required costs for manufacture of the battery module. Furthermore, this provides a safe separation from the space provided for receiving the coolant and the space within the compartments provided for accommodating the (groups of) battery cells.

In one embodiment, the base portion is made of aluminum or an aluminum alloy. One of the advantages of aluminum is the high thermal conductivity. Moreover, an aluminum die cast housing (base portion) with the afore-described structure of the cooling system will allow for side cooling without major part cost increase.

In one embodiment of the battery module, the edge of the base portion is continuously connected with the base cover in a sealed manner.

In the present context, the expression "in a sealed manner" is equivalent to "in fluid-proof manner," wherein the term "fluid" in particular refers to the coolant.

For example, a circumferential gasket can be arranged between the edge of the base portion and the base cover, the gasket having a shape corresponding or identical to that of the edge of the base portion and being connected, in the first direction, with the edge of the base portion and further being connected, against the first direction, with the base cover. In this case, the continuous connection of the base portion with the base cover is realized by the gasket.

Alternatively, the edge of the base portion can be welded to the base cover. In this case, the continuous connection of the base portion with the base cover is realized by welding.

In embodiments, the base cover, when viewed along the first direction, is congruent to the base portion and positioned such that the base cover completely covers the base portion. Then, the edge of the base portion may be sealed to the edge of the base cover. The sealing of the edge of the base portion to the edge of the base cover may be realized by a gasket having a shape corresponding or identical to that of the edge of the base portion.

In embodiments, the edge of the base portion comprises a circumferential first wall elevated into the first direction (i. e., to the base cover). Then, the first wall may be sealed to the base cover. Additionally or alternatively, on the base cover may be arranged a second wall protruding to the base portion, wherein the second wall has a shape corresponding or identical to that of the edge of the base portion. Then, the second wall may be sealed to the base portion.

An inlet may be arranged through the base cover or through the connection of the base cover with the base portion. Then, the inlet is configured for being connected to a coolant supply. Then, (fresh) coolant can be supplied, via the inlet, into the space formed between the base portion and the base cover. Also, an outlet may be arranged through the base cover or through the connection of the base cover with the base portion. Then, the outlet is configured for being connected to a coolant receptacle configured for receiving coolant. Then, (used) coolant can be discharged, via the outlet, from the space formed between the base portion and the base cover into the coolant receptacle.

Here, "fresh coolant" means coolant not having received heat from the battery cells, and "used coolant" means coolant having received heat from the battery cells or having flown around the indentations.

Of course, in each of the described aspects and embodiments, the roles of the "outlets" and "inlets" can be switched, i. e., any "inlet" can be regarded as an "outlet," if, at the same time, any "outlet" is regarded as an "inlet" in the above description. The above-described topologies of the "space system" (i. e., the system of the space formed between the base cover and the base portion linked to the interstices between the various indentations, irrespectively of the special geometric design of a certain embodiment) are not affected by such a switch.

In one embodiment of the battery module, the base cover and the base portion are formed together, as one piece, by injection molding or die casting.

This facilitates the manufacture of the complete battery module and thus considerably reduces the required costs for manufacture of the battery module. Furthermore, this increases the sealing between the base cover and the base portion, as no additional members for sealing (such as a gasket) are required. The piece comprising the base cover and the base portion may be made of aluminum or an aluminum alloy. An aluminum die cast housing (base portion together with base cover) with a cooling system with a structure as described in the foregoing will allow for side cooling without major part cost increase.

In one embodiment of the battery module, the base area is the area of the indentation having a maximal distance to the first virtual plane.

Alternatively, the base area may be equivalently defined as the area of the indentation having a minimal distance to the second virtual plane.

In one embodiment of the battery module, for each or at least for one of the indentations, the base area extending parallel to the first virtual plane.

In other words, all or some of the indentations comprise an area having a maximal distance to the first virtual plane and extending parallel to the first virtual plane. Then, each of the compartments have a base side parallel to the first virtual plane.

In one embodiment of the battery module, the base areas of each indentations have the same distance to the first virtual plane.

In other words, with respect to a predefined distance, all indentations comprise an area having a maximal distance to the first virtual plane (or, equivalently, a minimal distance to the second virtual plane) and spaced apart from the first virtual plane with the predefined distance. Then, measured from the first virtual plane along the first direction, all the compartments have the same depth.

In one embodiment of the battery module, each or some of the base areas have an oval or circular shape or a rectangular shape.

For example, in case of a circular base area arranged parallel to the first virtual plane, the compartment formed by an indentation then has a cylindrical shape, wherein the cylinder is closed from one side (the base area) and open at the other side. This may fit for groups of battery cells each having a cylindrical shape and stacked (with their planar sides) together along the first direction. Then, the group of stacked cylindrical battery cells can be received by the cylindrical compartment after being inserted into the cylindrical compartment against the first direction (provided, the radius of cylindrical shape of the battery cells is smaller than the radius of the circular base). In an alternative example, in case of a rectangular base area arranged parallel to the first virtual plane, the indentation is then shaped as a cuboid, wherein the cuboid has one open side (the open side lying in the first virtual plane). This may fit for groups of tacked battery cells each having a prismatic (cuboid) shape.

In one embodiment of the battery module, each or some of the indentations have side walls extending parallel to the first direction.

In embodiments, each or some of the indentations may have side walls being inclined. Specifically, the side walls may be inclined, with respect to the base area, by an angle larger than 90° (e. g., by an angle of 95°, 100°, 105°, or 110°). For example, in case of a rectangular base area arranged parallel to the first virtual plane, the indentation comprises four side walls, each of the side walls extending between one of the edges of the rectangular base area and the first virtual plane. Then, the compartment formed by this indentation has the shape of a frustum protruding, from the first virtual plane, against the first direction, and the base of the frustum being open and lying in the first virtual plane. In the example, the side walls may be arranged with different angles with respect to the base area. For example, two opposite side walls may be arranged in an angle of 90° with respect to the base area, and the two other opposite side walls may be arranged in an angle larger than 90° with respect to the base area. In the alternative example of a circular base area arranged parallel to the first virtual plane, the indentation (and thus the compartment formed by this indentation) has the shape of a conical frustum protruding, from the first virtual plane, against the first direction, and the base of the conical frustum being open and lying in the first virtual plane.

In one embodiment of the battery module according to any one of claims 1 to 9, wherein the indentations are shaped identically.

Then, the groups of battery cells preferably are shaped identically. Each of the groups of battery cells can then be accommodated in any one of the compartments (provided, the dimensions of the groups of cells are chosen such that the groups of cells fit into one of the compartments).

In one embodiment of the battery module, the indentations are arranged, with regard to the first virtual plane, in a 2-dimensional periodic pattern.

For example, the indentations may be arranged periodically with regard to a second direction (y) and, at the same time, be arranged periodically with regard to a third direction (z). The second direction (y) and the third direction (z) may each be perpendicular to the first direction (x). The third direction (z) may be perpendicular to the second direction (y). This may be in particular advantageous in cases, wherein the base area of all of the indentations has a rectangular shape. Alternatively, the third direction may have an angle of 60° to the second direction. The latter may be in particular advantageous in cases, wherein the base area of all of the indentations has a circular shape.

Such elevated structures may help to guide the coolant in the space between the base cover and the indentations in a non-linear way in order to distribute the fresh coolant within this space and thus increase a uniformly cooling effect on the compartments.

In one embodiment of the battery module, in all or at least some of the groups of battery cells, the battery cells are stacked along the first direction (x).

In one embodiment of the battery module, in all or at least some of the groups of battery cells, the battery cells are stacked in a direction perpendicular to the first direction (x).

For example, when the compartments have an essentially cuboid-like shape (see above), the battery cells of a group accommodated in one of the compartments may be stacked along a direction perpendicular to one of the side faces of the compartment. In an alternative example, when the compartments have an essentially cylindrical shape, a group of battery cells accommodated in one of the compartments may comprise battery cells each having a cylindrical shape (with the center axis being parallel to the first direction) and being stacked together along the first direction (see above).

A second aspect of the present disclosure is related to a battery pack comprising one or more of the battery modules according to the first aspect.

The battery pack may further comprise a battery management system (BMS) for monitoring and controlling the battery cells comprised in the battery pack as described in the introductory portion of the disclosure, and/or a plurality of detection means, e. g., for supervising the temperature or the currency of individual battery cells or of groups of battery cells.

A third aspect of the present disclosure is related to a vehicle comprising at least one battery module according to the first aspect and/or at least one battery pack according to the second aspect.

### Specific Embodiments

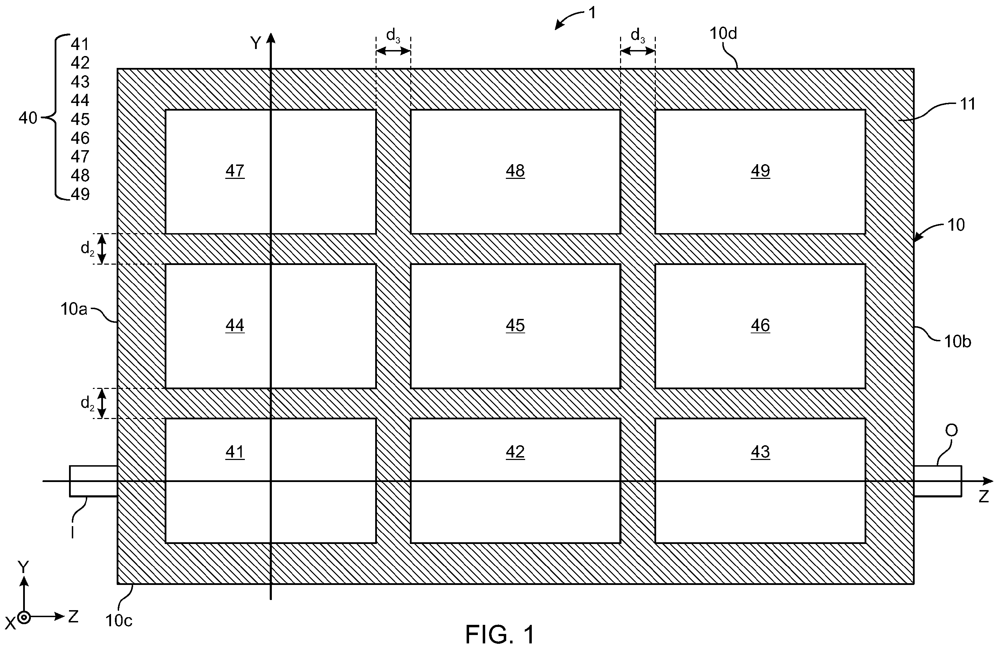

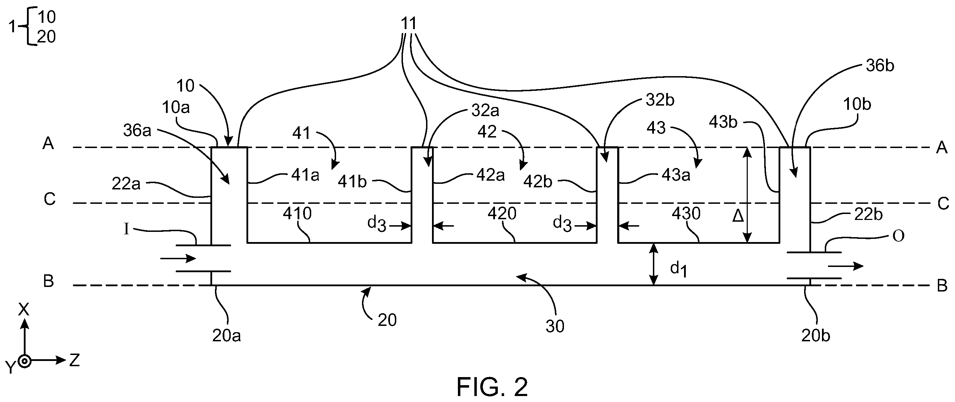

Figure 1 is a schematic top view illustrating a first embodiment of the battery module 1 according to the present disclosure. Further, Figure 2 is a schematic cross-sectional cut through the first embodiment shown in Fig. 1 along the arrow Z. To facilitate the following description, a Cartesian coordinate system with the axes x, y, z is also depicted in the figures. The battery module 1 comprises a base portion 10 and a base cover 20. In the top view of Fig. 1, only the base portion 10 is visible, since the base cover 20 is completely hidden by the base portion 10 (except for an inlet I and an outlet O, which will be described below). The base portion 10 is essentially a plate 11 extending parallel to the y-z-plane of the coordinate system.

With reference to Fig. 2, the plate 11 extends along a first virtual plane perpendicular to the drawing plane of Fig. 2 and intersecting the drawing plane of Fig. 2 along the line A-A. However, the plate 11 comprises a plurality of indentations 40 protruding against the x-direction.

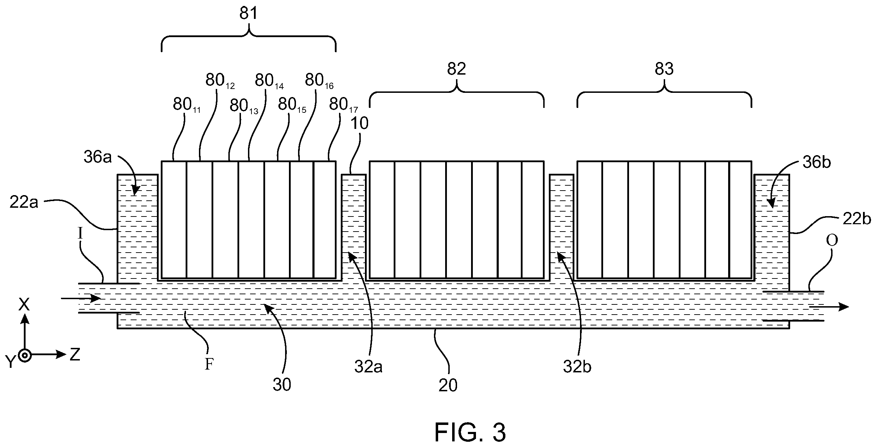

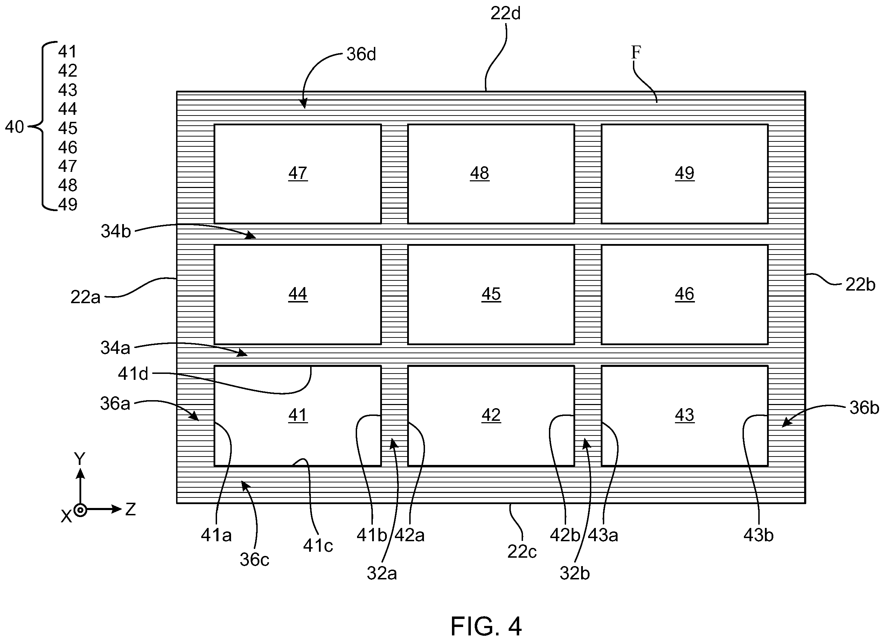

In the example of the first embodiment of the battery module 1, each of the indentations has a cuboid shape that forms a compartment with one open side (viz., the open side lying in the first virtual plane). Accordingly, as can be seen from Fig. 1, each of the compartments 41, 42, 43, 44, 45, 46, 47, 48, 49 has a rectangular top view. Further, from Fig. 2 it can be taken that also the cross-section of each of the compartments 41, 42, 43, 44, 45, 46, 47, 48, 49 has the shape of a rectangle, wherein, however, the upper side (with respect to the orientation shown in Fig. 2) is submitted, since the compartments are each open. A base area 410, 420, 430 (i. e., a bottom area with respect to Fig. 2), i. e., an area having a maximal distance to the first virtual plane, is formed parallel to the first virtual plane in a distance Δ for each of the indentations (or compartments 41, 42, 43, 44, 45, 46, 47, 48, 49). Also, the compartments 41, 42, 43, 44, 45, 46, 47, 48, 49 are each confined by sidewalls orientated perpendicular to the first virtual plane. For example, a first compartment 41 is confined, along the z-direction, by two side walls 41a and 41b arranged opposite to each other with respect to the base area 410 of the first compartment 41, the side walls 41a and 41b orientated parallel to the x-y-plane of the coordinate system. A pair of further sidewalls 41c and 41d confining the first compartment 41 with respect to the x-direction (see Fig. 4) is not visible in Fig. 2, as the further sidewalls 41c and 41d are arranged parallel to the y-z-plane of the coordinate system. Hence, each of the compartments 41, 42, 43, 44, 45, 46, 47, 48, 49 is in particular suitable to accommodate a group of battery cells (see Fig. 3), if each group of battery cells has a cuboid overall shape (e. g., the group of battery cells comprises a plurality of prismatic battery cells stacked together in a flush fitting way, as shown in Fig. 3 explicitly for a first group of battery cells 81 accommodated in the first compartment 41; see below).

In the example, the indentations (forming the compartments 41, 42, 43, 44, 45, 46, 47, 48, 49) are shaped identically to each other. Further, the indentations are arranged on the plate 11 in a two-dimensional periodic pattern. Here, the indentations / compartments are arranged as a matrix with reference to the top view provided by Fig. 1. Specifically, along the y-direction, the compartments are spaced apart from each other by a distance d₂. For example, the compartment 41 shown in the left bottom corner of the matrix of compartments as shown in Fig. 1 is spaced apart from the adjacent compartment 44 with respect to the y-direction by distance d₂, and the compartment 44, in turn, is spaced apart from the compartment 47 arranged next to it in the y-direction by likewise the distance d₂. Thus, the afore-mentioned compartments 41, 44, and 47 are aligned up periodically with respect to the y-direction (along the line indicated by the arrow Y). This applies in a similar manner to the compartments 42, 45, and 48 arranged in the centered area on the plate 11 with respect to the z-direction, and to the compartments 43, 46, and 49 arranged adjacent to the right edge of the base portion 10 (with respect to Fig. 1). Correspondingly, the compartment 41 shown in the left bottom corner of the matrix of compartments as shown in Fig. 1 is spaced apart from the adjacent compartment 42 with respect to the z-direction by distance d₃, and the compartment 42, in turn, is spaced apart from the compartment 43 arranged next to it in the z-direction by likewise the distance d₃. Thus, the afore-mentioned compartments 41, 42, and 43 are aligned up periodically with respect to the z-direction (along the line indicated by the arrow Z). This applies in a similar manner to the compartments 44, 45, and 46 arranged in the centered area on the plate 11 with respect to the y-direction, and to the compartments 47, 48, and 49 arranged adjacent to the upper edge of the base portion 10 (as shown in Fig. 1).

In the embodiment of the example, the circumferential edge of the base cover 20 is congruent to the circumferential edge of the base portion 10. Further, the base cover 20 is orientated such that, in the top view as provided by Fig. 1, it is completely hidden by the base portion 10. Then, due to the rectangular top view of both, the base portion 10 and the base cover 20, each of the latter comprises four (linear) side edges. Specifically, the base portion 10 (or, equivalently, the plate 11), comprises four (linear) side edges 10a, 10b, 10c, 10d. Then, behind each of these side edges 10a, 10b, 10c, 10d of the base portion 10, a respective side edge of the base cover 20 is arranged, when viewing against the x-direction.

The base portion 10 is connected to the base cover 20 by four side covers in a fluid-proof manner. Specifically, each of the side edges 10a, 10b, 10c, 10d of the base portion 10 is connected to the respective side edge of base cover 20 arranged behind the considered edges 10a, 10b, 10c, 10d of the base portion 10, when viewing against the x-direction. For example, with reference to Figs. 2 and 4, the left side edge 10a of the base portion 10 is connected to the left side edge 20a of the base cover 20 by a first side cover 22a, and, correspondingly, the right side edge 10b of the base portion 10 is connected to the right side edge 20b of the base cover 20 by a second side cover 22b arranged in parallel to the first side cover 22a. In a similar manner, the remaining side edges 10c, 10d of the base portion 10 are connected to respective side edges (not shown) of the base cover 20 by a third side cover and a fourth side cover (not shown), respectively, arranged parallel to each other, perpendicular to the first side cover 22a and the second side cover 22b, and opposite to each other with respect to the base portion 10 and the base cover 20.

Each of the side covers may be part of the base cover 20. Alternatively, each of the side covers may be part of the base portion 10. Also, some of the side covers (e. g., the first and the second side cover 22a, 22b) may be part of the base portion 10 and the remaining side covers (e. g., the third and the fourth side cover) may be part of the base cover 20. In each of these cases, the base portion 10 has to be fixed to the base cover 20. Then, the fixation has to be done in a fluid-proof manner. For example, a gasket can be inserted between the base portion 10 and the base cover 20 along those lines, where the base portion 10 is connected to the base cover 20. The base portion 10 may be formed, as one piece, by injection molding or die casting. This facilitates the manufacture of the base portion 10 and thus considerably reduces the required costs for manufacture of the battery module 1. Furthermore, this provides a safe separation from the space provided for receiving the coolant and the space within the compartments provided for accommodating the (groups of) battery cells.

Alternatively, the base cover 20 and the base portion 10 may be formed together, as one piece, by injection molding or die casting. This facilitates the manufacture of the complete battery module 1 and thus considerably reduces the required costs for manufacture of the battery module 1. Furthermore, this increases the sealing between the base cover 20 and the base portion 10, as no additional members for sealing (such as a gasket) are required.

Through the first side cover 22a, an inlet I is arranged, which is configured for being connected to an (external) coolant supply (not shown) such that coolant can flow, via the inlet I, into the space formed between the base cover 20 and the base portion 10 (as indicated by the arrow pointing into the inlet I). Correspondingly, through the second side cover 22b, an outlet O is arranged, which is configured for being connected with an (external) coolant receptacle (not shown) such that coolant can be discharged, via the outlet O, from the space formed between the base cover 20 and the base portion 10 into the coolant receptacle (as indicated by the arrow pointing out of the outlet O). The space formed between the base cover 20 and the base portion 10 may have a rather complicated structure, which will be explained in the following. Of course, in alternative embodiments, the inlet I and/or the outlet O may be arranged at other locations, e. g., the inlet I may be positioned close to the left side edge 10a of the base portion 10 and the outlet I may be positioned close to the right side edge 10b of the base portion 10.

With reference to Fig. 2, the base cover 20 is arranged below the base portion 10 such that the base cover 20 is spaced apart from the base areas 410, 420, 430 of each of the compartments 41, 42, 43, 44, 45, 46, 47, 48, 49. Specifically, in the example, the base cover 20 is spaced apart from the base areas 410, 420, 430 by a distance d₁. Hence, there is a space 30 between the base cover 20 and the base areas 410, 420, 430. Also, due to the above-explained matrix-like arrangement of the compartments 41, 42, 43, 44, 45, 46, 47, 48, 49 on the base portion 10, further spaces are provided between the side walls of the compartments 41, 42, 43, 44, 45, 46, 47, 48, 49, as shown in Figs. 2, 3, and 4. For example, a first interstice 32a is formed between the right side wall 41b of the first compartment 41 and the left side wall 42a of the second compartment 42 (with respect to the orientation as shown in Figs. 1 and 3). Along the z-direction, the width of the first interstice 32a is d₃. Also, a second interstice 32b is formed between the right side wall 42b of the second compartment 42 and the left side wall 43a of the third compartment 42 (with respect to the orientation as shown in Figs. 1 and 3). Along the z-direction, the width of the first interstice 32a is likewise d₃.

Moreover, with reference to Figs. 2 and 4, a further space is formed by a first side interstice 36a located between the first side cover 22a and the right side wall 41a of the first compartment 41, and yet a further space is formed by a second side interstice 36b located between the second side cover 22b and the left side wall 43b of the third compartment 43. This applies in a similar manner to each of the compartments 41, 42, 43, 44, 46, 47, 48, 49 located adjacent to at least one of the side edges 10a, 10b, 10c, 10d (and thus adjacent to at least one of the four side covers as described above), when viewed in the top view of Fig. 1, i. e., for any of these compartments, and interstice is formed between the side wall(s) adjacent to the respective side cover(s) and the respective side cover(s). Note that for any of the compartments 41, 43, 47, 49 located in a corner of the matrix-like arrangement of the compartments shown in Figs. 1 and 3, interstices are formed at two side walls of the compartment. For example, adjacent to the first compartment 41 as shown in Fig. 3, one interstice (viz., the first interstice 36a as described above with reference to Fig. 1) is formed between the first side cover 22a and the right side wall 41a of the first compartment 41, and a further interstice 36c is formed between the third side cover 22c and the side wall 41c of the first compartment 41 adjacent to the third side cover 22c.

From the foregoing explanations, it becomes clear that the space formed between the base cover 20 and the base portion 10 comprises the space 30 between the base cover 20 and the base areas 410, 420, 430 is connected to each of the interstices 32a, 32b formed between the various compartments 41, 42, 43, 44, 45, 46, 47, 48, 49 as well as to each of the interstices 36a, 36b, 36c, 36d formed between the side covers 22a, 22b, 22c, 22d and the respective adjacent compartments. Further, the space 30 between the base cover 20 and the base areas 410, 420, 430 is connected to each of the above-mentioned interstices. Accordingly, the coolant filled into the space formed between the base cover 20 and the base portion 10 can move freely within the space 30 and each of the interstices. Thus, such coolant comes in contact with the base areas 410, 420, 430 of each of the compartments 41, 42, 43, 44, 45, 46, 47, 48, 49 as well as with each of the side walls of the compartments 41, 42, 43, 44, 45, 46, 47, 48, 49.

This is shown in more detail by Figures 3 and 4. Figure 3 depicts the first embodiment of the battery module 1 according to the present disclosure in the same manner as Fig. 2, i. e., as a schematic cross-sectional cut through the first embodiment shown in Fig. 1 along the arrow Z. Additionally, however, Fig. 3 illustrates schematically the accommodation of groups of battery cells 81, 82, 83 in the compartments 41, 42, 43, respectively. In the illustrated embodiment, each group of battery cells 81, 82, 83 has a cuboid overall shape, i. e., it comprises a plurality of prismatic (cuboid) battery cells stacked together in a flush fitting manner. For example, the first group of battery cells 81 comprises a plurality of prismatic battery cells 80₁₁, 80₁₂, 80₁₃, 80₁₄, 80₁₅, 80₁₆, 80₁₇. This applies in a corresponding manner also to the second group of battery cells 82 and the third group of battery cells 83 shown in Fig. 3 as well as to each of the further groups of battery cells (not shown) placed within the remaining compartments 44, 45, 46, 47, 48, 49. In the example, the battery cells of each of the groups are stacked together along the z-direction. Alternatively, the battery cells of the groups may also be stacked together along the x-direction. In the latter case, it might be advantageous, if the compartments which exhibits a larger depth, i. e., the compartments may have a larger extension with regard to the x-direction. The groups of battery cells may be electrically interconnected to each other, e. g., The groups of battery cells may be electrically connected in series or in parallel. For the sake of simplicity and clarity, the electric connections (which may be realized, e. g., by busbars or wires) are not shown in the figures. Also, it is clear that for each group of battery cells, the battery cells comprised in the group are electrically interconnected to each other, preferably in series. This is also not shown for the sake of simplicity.

Moreover, it is indicated in Fig. 3 by the hatching that the space between the base portion 10 and the base cover 20 is completely filled with a coolant F. The coolant F can be supplied to the space between the base portion 10 and the base cover 20 via the inlet I and discharged from the space via the outlet O, as already discussed above with reference to Fig. 2. As can be seen, the base portion 10 provides a safe fluid-proof separation of the spaces within the compartments 41, 42, 43, wherein the group of battery cells 81, 82, 83 are accommodated, and the space between the base portion 10 and the base cover 20. Nonetheless, each of the groups of battery cells 81, 82, 83 it is cooled from several sides. As can be further seen, with reference to the orientation of the battery module 1 as shown in Fig. 3, a bottom side of each of the groups of battery cells 81, 82, 83 positively and completely abuts against the base area 410, 420, 430 of the respective compartment 41, 42, 43. Also, for any one of the groups of battery cells 81, 82, 83, each of the lateral sides positively abuts against one of the side walls of the respective compartment. For example, the left lateral side of the first group of battery cells 81 positively abuts against the left side wall 41a of the first compartment 41 as shown in Figs. 2 and 3, and, correspondingly, the right lateral side of the first group of battery cells 81 positively abuts against the right side wall 41b of the first compartment 41. Like manner, the remaining two lateral sides of the first group of battery cells 81 each positively abut against the respective adjacent side wall 41c, 41d of the first compartment 41. Accordingly, a heat exchange between the group of battery cells and the coolant F is enabled through the base area as well as through each of the side walls of the respective compartments, which accommodates the group of battery cells. This can also be seen from Figure 4, which provides the cross-sectional view through the first embodiment of the battery module 1 along the virtual plane that intersects the line C-C in Fig. 2 and is parallel to the y-z-plane of the coordinate system. Fig. 4 illustrates in particular that the coolant F (indicated by the hatching) is present in any one of the interstices 32a, 32b, 34a, 34b between neighbored compartments and the interstices 36a, 36b, 36c, 36d between the sites covers 22a, 22b, 22c, 22d and the respective adjacent compartments such that the coolant F flows around any one of the side walls of each of the compartments 41, 42, 43, 44, 45, 46, 47, 48, 49.

This is an improvement over conventional cooling systems, wherein groups of stacked battery cells are typically only cooled from one side (e. g., the bottom side). However, in the shown first embodiment of the battery module 1 according to the disclosure, each of the groups of battery cells 81, 82, 83 becomes not only cooled from the bottom side (i. e., the side facing the base area 410, 420, 430 of the respective compartment 41, 42, 43) but additionally, in contrast to conventional cooling systems, from each of the lateral sides (i. e., the four sides facing the side walls of the respective compartment, e. g., with reference to the first compartment 41, the four side walls 41a, 41b, 41c, and 41d). In other words, five of the six side faces of each of the groups of battery cells can be cooled with the first embodiment of the battery module 1 as shown in Figs. 1 to 4. Thus, an optimal cooling effect can be achieved by the battery module 1 according to the disclosure.

Furthermore, e. g., in case of the thermal event such as a thermal run-away, a thermal propagation from the group of battery cells being affected by the thermal event to the neighbored groups of battery cells and, possibly, across the whole battery module 1 can be effectively prevented due to the presence of the coolant between any two neighbored groups of battery cells (see Fig. 4). This effect is increased by the movement of the coolant within the space between the base portion 10 and the base cover 20 due to a supply of fresh coolant via the inlet I and a discharge of used coolant via the outlet O.

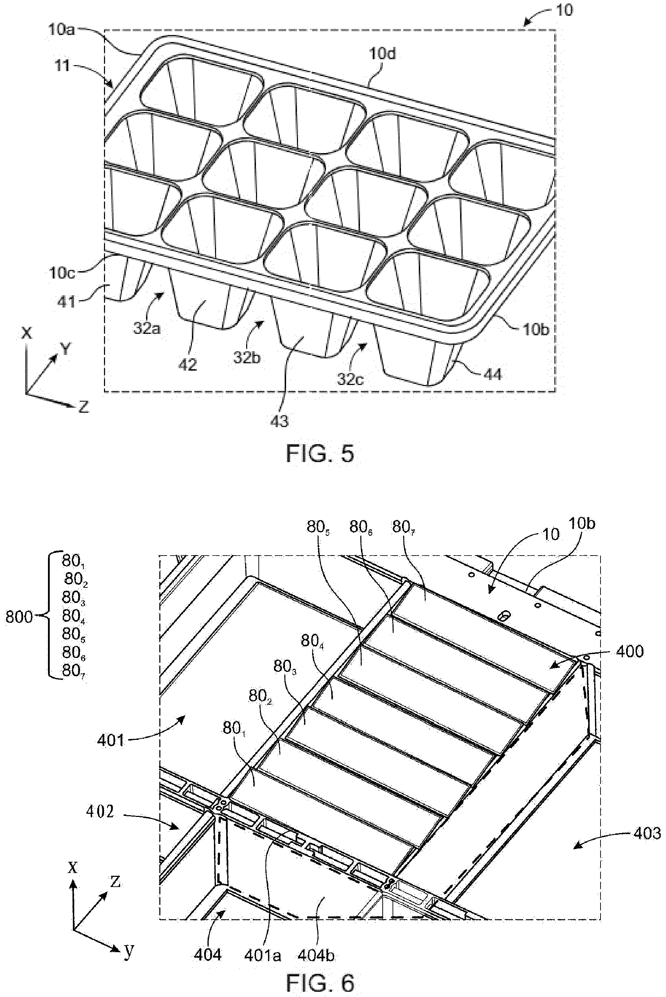

Figure 5 schematically illustrates the perspective view of a further example of a base portion 10 that can be used in another embodiment of the battery module 1 according to the present disclosure. In this example, the base portion 10 comprises an essentially rectangular plate 11 with rounded corners and having four side edges 10a, 10b, 10c, 10d. The plate 11 extents, along the virtual first plane, extending parallel to the y-z-plane of the Cartesian coordinate system. In the plate 11, a number of 12 indentations are arranged according to a (3 × 4)-matrix pattern. Specifically, four rows of indentations are arranged in parallel along the z-direction, wherein each of the rows of indentations comprises a number of three indentations arranged along the y-direction. Each of the indentations has a like shape. The indentations protrude from the plate 11 against the x-direction. The indentations have a flat base portion (not visible in Fig. 5) arranged parallel to the y-z-plane. With regard to the flat base portion, each of the side walls of the indentations are inclined by an angle larger than 90°. Thus, when viewing against the x-direction, the indentations have each a tapering appearance.

Each of the 12 indentations thus forms a compartment 41, 42, 43, 44 suitable for accommodating a group of battery cells. The base portion 10 shown in Fig. 5 may be manufactured, as one piece, by injection molding or die casting. In order to build a battery module 1 according to the present disclosure, a base cover (not shown) has to be arranged beneath the base portion 10. The base cover may be connected with the base portion 10 in a similar manner as described above with reference to Figs. 2 and 3 in order to form a sealed space between the base portion 10 and the base cover.

Figure 6 shows schematically parts of a further embodiment of the battery module 1 according to the disclosure. Specifically, a cell compartment with seven cells is shown from the inside of the battery module. The battery cells are encased by a die cast structure, which is configured to receive coolant, for example water, such that one can say that the battery cells are encased by a "coolant jacket," when the die cast structure is filled with coolant.

The base portion 10 comprises a plurality of indentations, each of which forming a compartment 400, 401, 402, 403, 404 (the compartment 400 being arranged between the compartments 401 and 403). Further indentations / compartments may be arranged along and/or against the y-direction and against the z-direction. In the compartment 400, a group of battery cells 800 is accommodated, which is formed by the prismatic battery cells 80₁, 80₂, 80₃, 80₄, 80₅, 80₆, 80₇ stacked together along the z-direction. The group of battery cells 800 has a cuboid shape positively abutting with each of its lateral faces against the side wall of the compartment 400, and, additionally, with its bottom face (not shown) against the base area (not shown) of the compartment 400. For the sake of simplicity, electrical harnesses such as terminals on the individual battery cells 80₁, 80₂, 80₃, 80₄, 80₅, 80₆, 80₇ and the electrical connections between the battery cells are not shown in the figure.

The compartment 400 is separated from each of the neighbored compartments 401, 403, 404 (with respect to the y-direction and the z-direction) by a double-wall formed by the side wall of the compartment 400 and the adjacent side wall of the respective neighbored compartment. Between each of these double-walls, and interstices is formed, which can be filled with coolant (see the above explanations as to Figs. 2 to 4). For example, with reference to the orientation of the battery module 1 as shown in Fig. 6, an interstice is formed between the front side wall 401a of the compartment 400 accommodating the group of battery cells 800 and the rear side wall 404b of the compartment 404 shown in the foreground of the figure. Also, an interstice (not shown) is formed between the rear side wall (not shown) of the compartment 400 and a side cover (not shown) that extends parallel to the x-y-plane of the coordinate system beneath the rear side edge 10b. Thus, the compartment 401 is surrounded, at each four side walls, by interstices that can be filled with coolant. Moreover, similar as described above with reference to Figs. 2 to 3, a space is formed beneath a base area (not shown) of the compartment 401. Thus, when each of the interstices surrounding the compartment 400 as well as the space formed beneath the base area of the compartment 400 is filled with coolant, the group of battery cells 800 is in thermal contact with the coolant with each of its lateral faces as well as with its bottom face. Thus, the interstices surrounding the compartment 400 and the space formed beneath the base area of the compartment 400 can be considered as a coolant jacket (or cooling jacket) surrounding the group of battery cells 800 at each of its sides except for the top side. The cooling system is fully external and there are no fluid-connectors to the inside of the battery necessary.

In the above-described design, the "coolant jacket" (see above) is formed directly into the casting without a costly core.

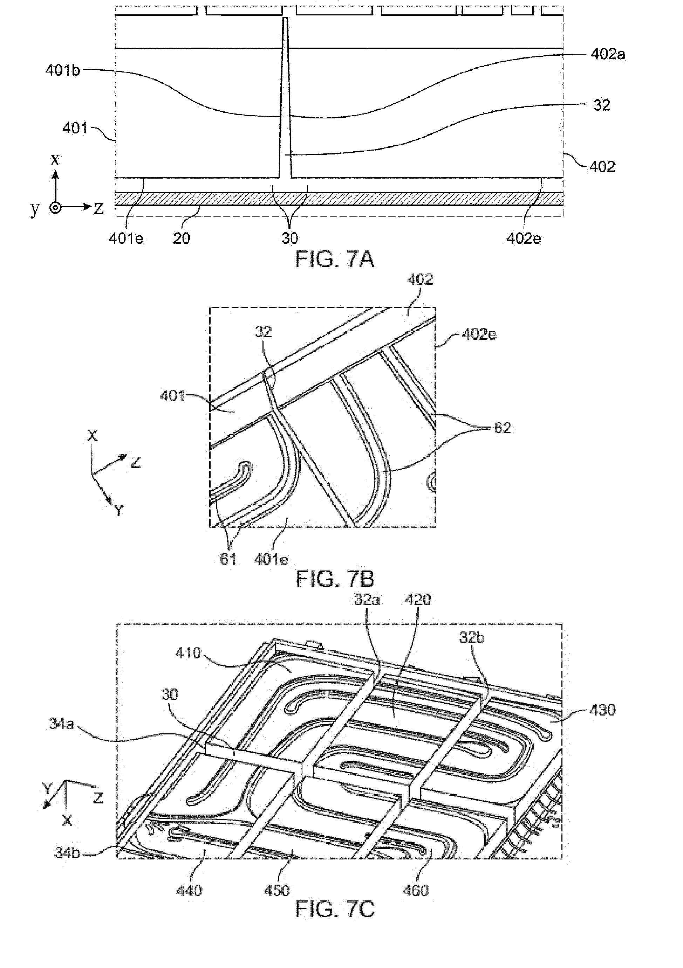

Figure 7A shows again a schematic cut through an embodiment of the battery module 1 according to the disclosure. Visible are two compartments 401 and 402 (being part of a base portion) arranged above the base cover 20. The base area 401e of the compartment 401 and the base area 402e of the compartment 402 are each spaced apart from the base cover 20 with respect to the x-direction. An interstice 32 is formed between the compartments 401 and 402. The interstice 32 is connected (linked) to the space 30. Thus, when coolant is guided into the space 30, the coolant reaches into the interstice 32 and rises up in the interstice 32. Accordingly, in this situation, both compartments 401 and 402 are cooled at their respective base areas 401e, 402e by the coolant provided in this space 30, and, additionally, the right side wall 401b of the compartment 401 as well as the left side wall 402a of the compartment 402 are each cooled by the coolant present in the interstice 32 (the terms "left" and "right" referring here to the view depicted in Fig. 7A).

Figure 7B shows the situation of Fig. 7A in a perspective view (the base cover 20 being omitted). Fig. 7B can be considered as being obtained from the situation shown in Fig. 7A, when viewing from bottom to top, i. e., along the x-direction. The interstice 32 protrudes wedge-shaped into the gap between the compartments 401 and 402. On each of the base areas 401e, 402e of the compartments 401, 402, streaming beds or semi-tubes-like structures are provided. These streaming beds or semi-tubes-like structures are realized by elevated structures 61, 62 arranged on that side of the base areas 401e, 402e of the compartments 401, 402 that faces against the x-direction (i. e., to the base cover 20).

Figure 7C can be considered as a perspective bottom view of (parts of) an embodiment of the battery module 1 similar to a slightly modified version of the first embodiment as shown in Figs. 1 to 4. Visible in the figure are the base areas 410, 420, 430, 440, 450, 460 of the compartments 41, 42, 43, 44, 45, 46, respectively. On each of the base areas, streaming beds or semi-tubes-like structures are formed by elevated structures in a way similar to that as described above with reference to Fig. 7B. Between any two neighbored base areas (with respect to the y-direction and the z-direction), the entrance to an interstice formed between the respective compartments is visible. Thus, the entirety of the entrances to the interstices 32a, 32b, 34a, 34b as shown in Fig. 7C has a net-like shape and, accordingly, the entirety of the interstices 32a, 32b, 34a, 34b has a ribbing structure. With reference to Fig. 7C, the base cover (not shown) with the arranged above the base areas 410, 420, 430, 440, 450, 460 with a certain distance d₁ (see Fig. 2). Then, a space 30 would be formed between the base areas 410, 420, 430, 440, 450, 460 and the base cover. Then, the space 30 is linked (connected) to each of the interstices 32a, 32b, 34a, 34b via the entrances to the interstices as shown in Fig. 7C. Accordingly, when that the space 30 is filled with coolant, the coolant penetrates through the entrances to the interstices 32a, 32b, 34a, 34b.

As illustrated in Figs. 7A to 7C with reference to a section of a battery housing (base portion and/or base cover), the cooling system designed as a "coolant jacket" (see above) may be created around a (not specifically defined) cell compartment (e. g., a compartment with seven battery cells as shown in Fig. 6). This ribbing structure may be approximately as high as the cell (with respect to the x-direction).

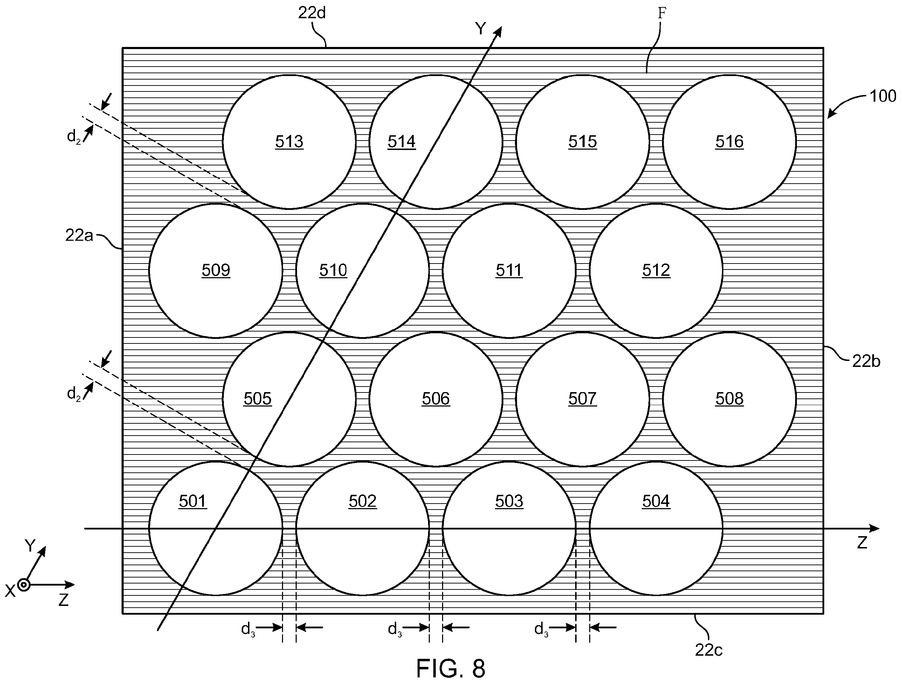

Figure 8 schematically illustrates a cross-sectional cut through an alternative example of a base portion 100 that can be implemented in a further embodiment of the battery module 1 according to the present disclosure. The base portion 100 is formed similar to the base portion 10 depicted in Figs. 1 to 4 except for the number and shape of the indentations / compartments and the spatial arrangement of the latter. Specifically, the base portion 100 comprises an essentially flat plate extending along the first virtual plane parallel to the y-z-plane of the coordinate system and having a plurality of indentations protruding against the x-direction. However, in contrast to the first embodiment shown in Figs. 1 to 4, the indentations each have a circular shape, when viewed along the x-direction. In other words, the indentations each form a cylindrical compartment 501, 502, 503, 504, 505, 506, 507, 508, 509, 510, 511, 512, 513, 514, 515, 516, i. e., the compartments have each a cylindrically shaped side wall. Each of the base areas of the indentations may be flat and extending along a second virtual plane parallel to the x-y-plane of the coordinate system (see the respective description as to Figs. 1 to 4). The cross-sectional cut shown in Fig. 8 intersects the base portion 100 parallel to the first virtual plane such that it intersects each of the cylindrically shaped compartments.

Again, the compartments 501, 502, 503, 504, 505, 506, 507, 508, 509, 510, 511, 512, 513, 514, 515, 516 are arranged in a two-dimensional periodic pattern with respect to the x-y-plane. Specifically, the identically shaped compartments are lined up periodically with respect to the y-direction as well as with respect to the z-direction. Thus, any two compartments being neighbored with respect to the y-direction have the same distance d₂ to each other (e. g., the compartments 501, 505, 510, 514 arranged along the line indicated by the arrow Y).

Correspondingly, any two compartments being neighbored with respect to the z-direction have a constant distance d₃ to each other (e. g., the compartments 501, 502, 503, 504 arranged along the line indicated by the arrow Z).

However, in contrast to the first embodiment shown in Figs. 1 to 4, the y-direction and the z-direction are not perpendicular to each other, but arranged with an angle of 60°, as indicated by the coordinate system in Fig. 8. Thus, in the view of Fig. 8, the compartments 501, 502, 503, 504, 505, 506, 507, 508, 509, 510, 511, 512, 513, 514, 515, 516 are arranged in a two-dimensional pattern, wherein each of the inner compartments is surrounded, in a 6-fold symmetrical manner, by six next-neighbored compartments. For example, the compartment 507 is surrounded by the six next-neighbored compartments 503, 504, 508, 512, 511, and 506 (counted in anti-clockwise fashion). Despite of the different shape and arrangement of the compartments, interstices between any two neighbored compartments are formed, and, also, interstices between compartments close to the side covers 22a, 22b, 22c, 22d are formed (the side covers 22a, 22b, 22c, 22d being arranged similarly as explained with reference to Figs. 1 to 4). Moreover, each of the afore-mentioned interstices is fluidly connected (linked) to a space formed between the bottom areas of the compartments 501 to 516 and base cover arranged behind the cut shown in Fig. 8 parallel to the x-y-plane. Thus, also in embodiments using the base portion 100 depicted in Fig. 8, each of the compartments 501 to 516 are thermally in contact with the coolant F at the base area and the cylindrical side wall, when the space between the base portion 100 and the base cover is filled with coolant. Thus, also with this construction, and optimal cooling of each of the groups of battery cells (not shown) accommodated in the plurality of compartments can be achieved. In the present case, it may be advantageous, if the groups are each formed by cylindrical battery cells stacked together along the center axis of their cylindrical shapes.

### Reference signs

- 1: battery module
- 10: base portion
- 10a, 10b, 10c, 10d: side edges of base portion
- 11: plate
- 20: base cover
- 20a, 20b: side edges of base cover
- 22a, 22b, 22c, 22d: side covers
- 30: space
- 32, 32a, 32b: interstices
- 34a, 34b: interstices
- 36a, 36b: interstices
- 40: plurality of compartments
- 41, 42, 43, 44, 45, 46, 47, 48, 49: compartments
- 41a, 41b, 41c, 41d: side walls of first compartment
- 42a, 42b: side walls of second compartment
- 43a, 43b: side walls of third compartment
- 61, 62: elevated structures
- 80₁, 80₂, 80₃, 80₄, 80₅, 80₆, 80₇: battery cells
- 80₁₁, 80₁₂, 80₁₃, 80₁₄, 80₁₅, 80₁₆, 80₁₇: battery cells
- 81, 82, 83: groups of battery cells
- 100: base portion (alternative embodiment)
- 400, 401, 402, 403, 404: compartments
- 401a, 402a, 402b: side walls
- 401e, 402e: base areas
- 410, 420, 430, 440, 450, 460: base areas
- 501 - 516: cylindrical compartments
- 800: group of battery cells
- A-A, B-B, C-C: lines indicating intersections
- Δ, d₁, d₂, d₃: distances
- F: coolant
- I: inlet
- O: outlet
- x, y, z: axes of a coordinate system
- Y, Z: arrows

## Claims

1. A battery module (1) comprising:
a base portion (10, 100),
a base cover (20),
a plurality of groups of battery cells (81, 82, 83),
wherein the base portion (10, 100) extends along a first virtual plane being perpendicular to a first direction (x);
wherein the base portion (10, 100) comprises a plurality of indentations (40) protruding against the first direction (x);
wherein each of the indentations forms a compartment (41, 42, 43, 44, 45, 46, 47, 48, 49) configured to accommodate a group of battery cells;
wherein each of the groups of battery cells (81, 82, 83) is accommodated in one of the compartments (41, 42, 43, 44, 45, 46, 47, 48, 49);
wherein for any two neighbored indentations, an interstice (32a, 32b, 34a, 34b) is formed between these indentations, each of the interstices being configured for being filled with a coolant;
wherein the base cover (20) extends along a second virtual plane being parallel to the first virtual plane and arranged in front of the first virtual plane, when viewing into the first direction (x); and
wherein the base cover (20) is spaced apart from each of the indentations;
wherein a space (30) is formed between the base cover (20) and the indentations, the space being configured for being filled with a coolant;
wherein the space (30) and the interstices (32a, 32b, 34a, 34b) are connected to each other;
wherein each of the indentations comprises a base area (410, 420, 430, 440, 450, 460);
wherein the side of base cover (20) facing the base portion (10, 100) comprises an elevated structure forming one or more streaming beds or semi-tubes-like structures configured for guiding a coolant across the side along a predefined way; and/or
wherein the sides of at least some of the base areas (410, 420, 430, 440, 450, 460) facing the base cover (20) comprise an elevated structure (61, 62) forming one or more streaming beds or semi-tubes-like structures configured for guiding a coolant across the side along a predefined way.

2. The battery module according to claim 1, wherein the base portion (10, 100) is formed, as one piece, by injection molding or die casting.

3. The battery module according to claim 1 or 3, wherein the edge of the base portion (10, 100) is continuously connected with the base cover (20) in a sealed manner.

4. The battery module according to any one of claims 1 to 3, wherein the base cover (20) and the base portion (10, 100) are formed together, as one piece, by injection molding or die casting.

5. The battery module according to any one of claims 1 to 4, wherein the base area is the area of the indentation having a maximal distance to the first virtual plane.

6. The battery module according to claim 5, wherein for each or at least for one of the indentations, the base area (410, 420, 430, 440, 450, 460) extending parallel to the first virtual plane.

7. The battery module according to claim 5 or 6, wherein the base areas (410, 420, 430, 440, 450, 460) of each indentations have the same distance to the first virtual plane.

8. The battery module according to any one of claims 5 to 7, wherein each or some of the base areas (410, 420, 430, 440, 450, 460) have an oval or circular shape or a rectangular shape.

9. The battery module according to any one of claims 1 to 7, wherein each or some of the indentations have side walls (401a, 402a, 402b) extending parallel to the first direction (x).

10. The battery module according to any one of claims 1 to 9, wherein the indentations are shaped identically.

11. The battery module according to any one of claims 1 to 10, wherein the indentations are arranged, with regard to the first virtual plane, in a 2-dimensional periodic pattern.

12. The battery module according to any one of claims 1 to 11,
wherein in all or at least some of the groups of battery cells (81, 82, 83), the battery cells are stacked along the first direction (x); and/or
wherein in all or at least some of the groups of battery cells (81, 82, 83), the battery cells are stacked in a direction perpendicular to the first direction (x).

13. A battery pack comprising one or more of the battery modules (1) according to any one of claims 1 to 12.

14. A vehicle comprising at least one battery module (1) according to any one of claims 1 to 12 and/or at least one battery pack according to claim 13.

## Patentansprüche

1. Batteriemodul (1), umfassend:
ein Basisteil (10, 100),
eine Basisabdeckung (20),
eine Vielzahl von Gruppen von Batteriezellen (81, 82, 83),
wobei sich das Basisteil (10, 100) entlang einer ersten virtuellen Ebene erstreckt, die senkrecht zu einer ersten Richtung (x) ist;
wobei das Basisteil (10, 100) eine Vielzahl von Vertiefungen (40) umfasst, die entgegen der ersten Richtung (x) hervorstehen;
wobei jede der Vertiefungen ein Aufnahmefach (41, 42, 43, 44, 45, 46, 47, 48, 49) bildet, das dazu konfiguriert ist, eine Gruppe von Batteriezellen aufzunehmen;
wobei jede der Gruppen von Batteriezellen (81, 82, 83) in einem der Aufnahmefächer (41, 42, 43, 44, 45, 46, 47, 48, 49) aufgenommen ist;
wobei für beliebige zwei benachbarte Vertiefungen ein Zwischenraum (32a, 32b, 34a, 34b) zwischen diesen Vertiefungen ausgebildet ist, wobei jeder der Zwischenräume dazu konfiguriert ist, mit einem Kühlmittel gefüllt zu werden;
wobei sich die Basisabdeckung (20) entlang einer zweiten virtuellen Ebene erstreckt, die parallel zu der ersten virtuellen Ebene ist und, beim Blick in die erste Richtung (x), vor der ersten virtuellen Ebene angeordnet ist; und
wobei die Basisabdeckung (20) von jeder der Vertiefungen beabstandet ist;
wobei ein Raum (30) zwischen der Basisabdeckung (20) und den Vertiefungen ausgebildet ist, wobei der Raum dazu konfiguriert ist, mit einem Kühlmittel gefüllt zu werden;
wobei der Raum (30) und die Zwischenräume (32a, 32b, 34a, 34b) miteinander verbunden sind;
wobei jede der Vertiefungen einen Basisbereich (410, 420, 430, 440, 450, 460) umfasst;
wobei die dem Basisteil (10, 100) gewandte Seite der Basisabdeckung (20) eine erhöhte Struktur umfasst, die ein oder mehrere Strömungsbetten oder halbrohrartige Strukturen bildet, die zum Führen eines Kühlmittels über die Seite entlang eines vordefinierten Weges konfiguriert sind; und/oder
wobei die der Basisabdeckung (20) gewandten Seiten von mindestens einigen der Basisbereiche (410, 420, 430, 440, 450, 460) eine erhöhte Struktur (61, 62) umfassen, die ein oder mehrere Strömungsbetten oder halbrohrartige Strukturen bildet, die zum Führen eines Kühlmittels über die Seite entlang eines vordefinierten Weges konfiguriert sind.

2. Batteriemodul nach Anspruch 1, wobei das Basisteil (10, 100) durch Spritzgießen oder Druckguss einstückig ausgebildet ist.

3. Batteriemodul nach Anspruch 1 oder 3, wobei der Rand des Basisteils (10, 100) mit der Basisabdeckung (20) auf eine abgedichtete Weise kontinuierlich verbunden ist.

4. Batteriemodul nach einem der Ansprüche 1 bis 3, wobei die Basisabdeckung (20) und das Basisteil (10, 100) zusammen durch Spritzgießen oder Druckguss einstückig ausgebildet sind.

5. Batteriemodul nach einem der Ansprüche 1 bis 4, wobei der Basisbereich der Bereich der Vertiefung ist, der einen maximalen Abstand zu der ersten virtuellen Ebene aufweist.

6. Batteriemodul nach Anspruch 5, wobei sich für jede oder zumindest für eine der Vertiefungen der Basisbereich (410, 420, 430, 440, 450, 460) parallel zu der ersten virtuellen Ebene erstreckt.

7. Batteriemodul nach Anspruch 5 oder 6, wobei die Basisbereiche (410, 420, 430, 440, 450, 460) jeder Vertiefung den gleichen Abstand zu der ersten virtuellen Ebene aufweisen.

8. Batteriemodul nach einem der Ansprüche 5 bis 7, wobei jeder oder einige der Basisbereiche (410, 420, 430, 440, 450, 460) eine ovale oder kreisförmige Form oder eine rechteckige Form aufweisen.

9. Batteriemodul nach einem der Ansprüche 1 bis 7, wobei jede oder einige der Vertiefungen Seitenwände (401a, 402a, 402b) aufweisen, die sich parallel zu der ersten Richtung (x) erstrecken.

10. Batteriemodul nach einem der Ansprüche 1 bis 9, wobei die Vertiefungen identisch geformt sind.

11. Batteriemodul nach einem der Ansprüche 1 bis 10, wobei die Vertiefungen in Bezug auf die erste virtuelle Ebene in einem zweidimensionalen periodischen Muster angeordnet sind.

12. Batteriemodul nach einem der Ansprüche 1 bis 11,
wobei in allen oder zumindest einigen der Gruppen von Batteriezellen (81, 82, 83) die Batteriezellen entlang der ersten Richtung (x) gestapelt sind; und/oder
wobei in allen oder zumindest einigen der Gruppen von Batteriezellen (81, 82, 83) die Batteriezellen in einer Richtung senkrecht zu der ersten Richtung (x) gestapelt sind.

13. Batteriepack, umfassend ein oder mehrere der Batteriemodule (1) gemäß einem der Ansprüche 1 bis 12.

14. Fahrzeug, umfassend mindestens ein Batteriemodul (1) gemäß einem der Ansprüche 1 bis 12 und/oder mindestens ein Batteriepack gemäß Anspruch 13.

## Revendications

1. Module de batterie (1) comportant :
une partie de base (10, 100),
un couvercle de base (20),
une pluralité de groupes d'éléments de batterie (81, 82, 83),
dans lequel la partie de base (10, 100) s'étend le long d'un premier plan virtuel étant perpendiculaire à une première direction (x) ;
dans lequel la partie de base (10, 100) comporte une pluralité d'indentations (40) faisant saillie contre la première direction (x) ;
dans lequel chacune des indentations forme un compartiment (41, 42, 43, 44, 45, 46, 47, 48, 49) configuré pour accueillir un groupe d'éléments de batterie ;
dans lequel chacun des groupes d'éléments de batterie (81, 82, 83) est logé dans l'un des compartiments (41, 42, 43, 44, 45, 46, 47, 48, 49) ;
dans lequel, pour deux indentations adjacentes quelconques, un interstice (32a, 32b, 34a, 34b) est formé entre ces indentations, chacun des interstices étant configuré pour être rempli d'un liquide de refroidissement ;
dans lequel le couvercle de base (20) s'étend le long d'un deuxième plan virtuel étant parallèle au premier plan virtuel et agencé devant le premier plan virtuel, en regardant dans la première direction (x) ; et
dans lequel le couvercle de base (20) est espacé de chacune des indentations ;
dans lequel un espace (30) est formé entre le couvercle de base (20) et les indentations, l'espace étant configuré pour être rempli d'un liquide de refroidissement ;
dans lequel l'espace (30) et les interstices (32a, 32b, 34a, 34b) sont reliés entre eux,
dans lequel chacune des indentations comporte une zone de base (410, 420, 430, 440, 450, 460) ;
dans lequel le côté du couvercle de base (20) faisant face à la partie de base (10, 100) comporte une structure surélevée formant un ou plusieurs lits de flux ou des structures semblables à des demi-tubes configurés pour guider un liquide de refroidissement sur le côté le long d'un chemin prédéfini ; et/ou
dans lequel les côtés d'au moins certaines des zones de base (410, 420, 430, 440, 450, 460) faisant face au couvercle de base (20) comportent une structure surélevée (61, 62) formant un ou plusieurs lits de flux ou des structures semblables à des demi-tubes configurés pour guider un liquide de refroidissement sur le côté le long d'un chemin prédéfini.

2. Module de batterie selon la revendication 1, dans lequel la partie de base (10, 100) est formée, en une seule pièce, par moulage par injection ou moulage sous pression.

3. Module de batterie selon la revendication 1 ou 3, dans lequel le bord de la partie de base (10, 100) est connecté en continu au couvercle de base (20) de manière étanche.

4. Module de batterie selon l'une quelconque des revendications 1 à 3, dans lequel le couvercle de base (20) et la partie de base (10, 100) sont formés ensemble, comme une seule pièce, par moulage par injection ou moulage sous pression.

5. Module de batterie selon l'une quelconque des revendications 1 à 4, dans lequel la zone de base est la zone de l'indentation ayant une distance maximale par rapport au premier plan virtuel.

6. Module de batterie selon la revendication 5, dans lequel pour chacune ou au moins l'une des indentations, la zone de base (410, 420, 430, 440, 450, 460) s'étend parallèlement au premier plan virtuel.

7. Module de batterie selon la revendication 5 ou 6, dans lequel les zones de base (410, 420, 430, 440, 450, 460) de chaque indentation ont la même distance par rapport au premier plan virtuel.

8. Module de batterie selon l'une quelconque des revendications 5 à 7, dans lequel chacune ou certaines des zones de base (410, 420, 430, 440, 450, 460) présentent une forme ovale ou circulaire ou une forme rectangulaire.

9. Module de batterie selon l'une quelconque des revendications 1 à 7, dans lequel chacune ou certaines des indentations présentent des parois latérales (401a, 402a, 402b) s'étendant parallèlement à la première direction (x).

10. Module de batterie selon l'une quelconque des revendications 1 à 9, dans lequel les indentations sont de forme identique.

11. Module de batterie selon l'une quelconque des revendications 1 à 10, dans lequel les indentations sont agencées, par rapport au premier plan virtuel, selon un motif périodique 2D.

12. Module de batterie selon l'une quelconque des revendications 1 à 11,
dans lequel dans tous ou au moins certains des groupes d'éléments de batterie (81, 82, 83), les éléments de batterie sont empilés le long de la première direction (x) ; et/ou
dans lequel dans tous ou au moins certains des groupes d'éléments de batterie (81, 82, 83), les éléments de batterie sont empilés dans une direction perpendiculaire à la première direction (x).

13. Bloc-batterie comportant un ou plusieurs des modules de batterie (1) selon l'une quelconque des revendications 1 à 12.

14. Véhicule comportant au moins un module de batterie (1) selon l'une quelconque des revendications 1 à 12 et/ou au moins un bloc-batterie selon la revendication 13.
